**Europäisches Patentamt**

**European Patent Office**

**Office européen des brevets**

(11) Veröffentlichungsnummer: **0 290 867 B1**

# EUROPÄISCHE PATENTSCHRIFT

(45) Veröffentlichungstag der Patentschrift: **10.06.92**

(51) Int. Cl.⁵: **G01M 1/16**

(21) Anmeldenummer: **88106743.3**

(22) Anmeldetag: **27.04.88**

(54) Verfahren zur Bestimmung der Lage und Grösse einer Korrektur.

(30) Priorität: **09.05.87 DE 3715499**

(43) Veröffentlichungstag der Anmeldung:
**17.11.88 Patentblatt 88/46**

(45) Bekanntmachung des Hinweises auf die
Patenterteilung:
**10.06.92 Patentblatt 92/24**

(84) Benannte Vertragsstaaten:
**DE ES FR GB IT SE**

(56) Entgegenhaltungen:
**DE-A- 2 830 070**
**DE-A- 3 003 127**
**US-A- 3 478 603**

(73) Patentinhaber: **CARL SCHENCK AG**
**Landwehrstrasse 55 Postfach 40 18**
**W-6100 Darmstadt(DE)**

(72) Erfinder: **Schönfeld, Harald**
**Aumühlenweg 1**
**W-6100 Darmstadt(DE)**

(74) Vertreter: **Brandt, Ernst-Ulrich**
**Fa. Carl Schenck AG Patentabteilung Land-**
**wehrstrasse 55 Postfach 40 18**
**W-6100 Darmstadt 1(DE)**

EP 0 290 867 B1

## Beschreibung

Die Erfindung bezieht sich auf ein Verfahren zur Bestimmung von Lage und Größe einer Korrektur gemäß dem Oberbegriff des Patentanspruchs 1.

Derartige Verfahren bewirken die Verringerung einer festgestellten Unwucht durch Vornahme von bezüglich der Größe stufenweise und bezüglich der Lage kontinuierlichen Korrekturen, beispielsweise beim Wuchten von mit Reifen versehenen Kraftfahrzeugrädern durch Anbringung gestufter Bleigewichte in bestimmten Winkellagen.

Bei dem aus der US-PS 3,478,603 bekannten Verfahren wird die Unwucht eines luftbereiften Fahrzeugrades mit Hilfe einer Auswuchtmaschine festgestellt, auf der das Rad horizontal angeordnet wird. Jede statische Unwucht führt zu einem Neigen der Radebene gegenüber der Horizontalebene. Mit Hilfe einer Anzeigeeinrichtung wird die leichteste Stelle eines Rades ermittelt. Zum Ausgleich stehen mehrere gestufte Gewichtssätze mit jeweils vier Wuchtgewichten einheitlicher Masse zur Verfügung. Die vier Wuchtgewichte eines Gewichtssatzes werden in Paaren derart an der Felgenschulter verschieblich angeordnet, daß sie einen Abstand von 120° zueinander und von 60° zum leichtesten Punkt aufweisen. Durch symmetrisches Verschieben der Gewichtspaare wird das Rad ausgewuchtet, wobei der Fall auftreten kann, daß Gewichtspaare eines anderen Gewichtssatzes zum Ein-satz kommen können. Anschließend wird das eine Wuchtge-wicht eines jeden Paares an der Felgenschulter befestigt, während das zweite Wuchtgewicht des Paares auf der gegenüberliegenden Felgenschulter befestigt wird. Dieses Verfahren zum statischen Auswuchten eines Fahrzeugrades ist umständlich und sehr zeitaufwendig und erfordert eine große Anzahl von Wuchtgewichten, die wegen der paarweisen Zuordnung zudem noch speziell ausgebildet sein müssen.

Der Erfindung liegt die Aufgabe zugrunde, ein Verfahren zur Bestimmung von Lage und Größe einer Korrektur zur Unwuchtverringerung anzugeben, durch die mit höchstens einem Wuchtgewicht pro Korrekturebene eine minimale statische Restunwucht erzielbar ist.

Erfindungsgemäß wird diese Aufgabe durch die in Patentanspruch 1 angegebene Erfindung gelöst. Weiterbildungen und vorteilhafte Ausführungsbeispiele sind in den abhängigen Ansprüchen angegeben.

Mit der Erfindung wird erreicht, daß mit einfachsten Mitteln, nämlich durch das Vorsehen höchstens einer Korrektur, d. h. durch die Anordnung höchstens eines Wuchtgewichtes in jeder der beiden Korrekturebenen, eine gravierende Verminderung der statischen Restunwucht eines mit gestuften Wuchtgewichten zu wuchtenden Körpers sichergestellt ist. Aus den aufgrund der Stufung der Wuchtgewichte möglichen Korrekturen wird die Korrektur ermittelt, die der geringstmöglichen statischen Restunwucht zugeordnet ist und bei der die aufgrund von Restunwuchten pro Korrekturebene vorliegende dynamische Restunwucht vernachlässigbar klein ist; dazu wird eine obere Grenze für die dynamische Restunwucht und damit eine obere Grenze für die Restunwucht je Korrekturebene vorgegeben. Mit der Erfindung wird der beim Wuchten mit gestuften Wuchtgewichten stets vorliegende Stufungs-Wuchtfehler in den rein dynamischen Bereich verlagert, was sich bei scheibenförmigen Körpern, insbesondere bei Fahrzeugrädern als vorteilhaft hinsichtlich der Laufruhe erweist. Es hat sich herausgestellt, daß mit dem erfindungsgemäßen Verfahren Korrekturen ermittelt werden, mit denen in den weitaus überwiegenden Fällen die statische Unwucht vollständig - sieht man von Restunwuchten aufgrund von zufälligen Fehlern wie z. B. Gewichtsfehlern der Wuchtgewichte oder Montagefehler bei der Anbringung der Wuchtgewichte ab - beseitigt wird.

Eine Vereinfachung des Verfahrens ergibt sich dadurch, daß die verschiedenen Korrekturen durch die beiden der ermittelten Unwucht nächstkommenden Wuchtgewichtsstufen je Korrekturebene bestimmt werden.

Zweckmäßig ist eine Vorgehensweise, bei der Kombinationen der beiden Wuchtgewichtsstufen je Korrekturebene gebildet werden, deren Resultierende der resultierenden Unwucht entspricht, bei der die Differenz jeder Kombination zur Unwucht in einer der beiden Korrekturebenen ermittelt wird, bei der diejenige Kombination ermittelt wird, die die kleinste Differenz aufweist, und bei der, falls die Differenz nicht größer ist als die je Korrekturebene zulässige Restunwucht, diese Kombination als Korrektur in der einen Korrekturebene vorgesehen wird und die vorzusehende Korrektur in der anderen Korrekturebene aus der Korrektur in der ersten Korrekturebene und der resultierenden Unwucht ermittelt wird, und bei der, falls die Differenz größer ist als die je Korrekturebene zulässige Restunwucht, Korrekturen ermittelt werden, deren Resultierende von der resultierenden Unwucht abweichen und aus diesen ermittelten Korrekturen die Korrektur mit der kleinsten Abweichung zur resultierenden Unwucht zur Korrektur vorgesehen wird. Da in den weitaus überwiegenden Fällen die Differenz der Korrektur zur Unwucht nicht größer ist als die in Abhängigkeit von der tolerierbaren dynamischen Unwucht festgelegte zulässige Restunwucht je Korrekturebene wird mit wenigen Schritten sehr schnell die Korrektur zur vollständigen Beseitigung der statischen Unwucht ermittelt. In den wenigen verbleibenden Fällen, die insbesondere Körper mit in einem Winkel nahe 0° oder nahe 180° zueinander liegenden Unwuchten betreffen, ist die Ermittlung der Korrektur für die geringstmögliche statische Unwucht mit wenigen zusätzlichen Verfahrensschritten sichergestellt.

Es hat sich als günstig erwiesen, daß bei der Ermittlung der Korrekturen zum einen die Korrekturen herangezogen werden, die je Korrekturebene um die zulässige Restunwucht der ermittelten Unwucht entfernt sind, zum anderen Korrekturen herangezogen werden, deren Richtungen der Richtung der resultierenden Unwucht entsprechen oder entgegengesetzt gerichtet sind, deren Summen von der resultierenden Unwucht abweichen, und die je Korrekturebene eine vorgegebene Differenz zur Unwucht nicht überschreiten. Es ist zweckmäßig, bei der Ermittlung der Korrekturen diejenigen Korrekturen in Richtung der oder entgegengesetzt zur resultierenden Unwucht mit der kleinsten Differenz zur ermittelten Unwucht in der jeweiligen Korrekturebene heranzuziehen.

Anhand der Zeichnungen wird die Erfindung im folgenden an Beispielen näher erläutert.

Es zeigen:

Fig. 1
eine Auswuchtmaschine mit einem Fahrzeugrad mit zwei Korrekturebenen,

Fig. 2
schematisch die in den Korrekturebenen ermittelten Unwuchten und die Stufung der Wuchtgewichte,

Fig. 3
schematisch die möglichen sich aufgrund der Stufung ergebenden statischen Restunwuchten,

Fig. 4
schematisch den Einfluß einer Winkeldrehung der Wuchtgewichte,

Fig. 5
eine schematische Darstellung zur Erläuterung der Verfahrensschritte,

Fig. 6
ein Flußdiagramm für das Verfahren,

Figuren 7, 8 und 9
schematische Darstellungen zur Erläuterung von Verfahrensschritten

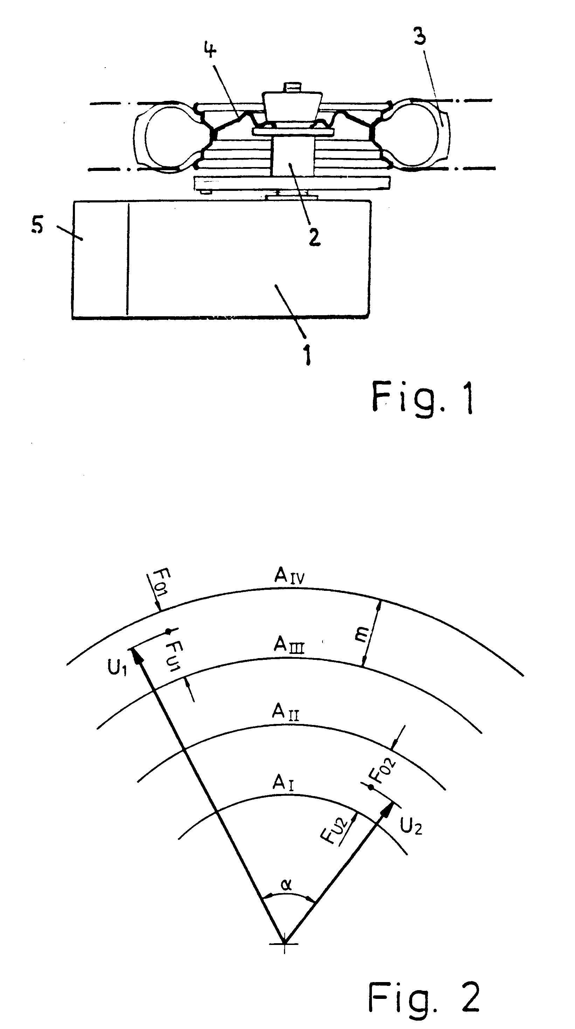

In Fig. 1 ist eine Auswuchtmaschine 1 mit einer Wuchtspindel 2 dargestellt, auf der ein scheibenförmiger Körper in Form eines mit einem Reifen 3 versehenen Fahrzeugrades 4 angeordnet ist. Mittels nicht näher dargestellter Schwingungsaufnehmer werden die infolge einer Unwucht des Fahrzeugrades 4 sich einstellenden Schwingungen erfaßt und ebenso wie ein einmal pro Umdrehung des rotierenden Fahrzeugrades ermittelter Bezugsimpuls einer Unwuchtmeßeinrichtung 5 zugeführt. Zur Verringerung der Unwucht werden in den beiden strichpunktiert angedeuteten Korrekturebenen die von der Unwuchtmeßeinrichtung 5 ermittelten Wuchtgewichte angebracht.

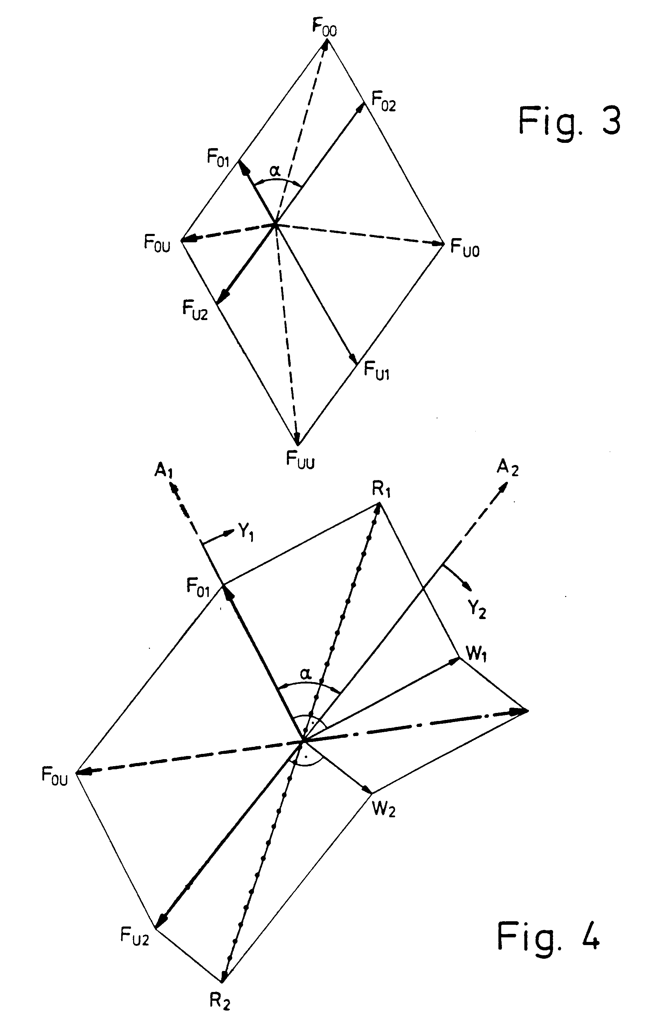

In Fig. 2 sind die Unwuchten, die die mit der Unwuchtmeßeinrichtung 5 gemessenen Unwuchten in den beiden Korrekturebenen des Fahrzeugrades vollständig kompensieren, mit $U_1$ für die erste Korrekturebene und mit $U_2$ für die zweite Korrekturebene bezeichnet. Die beiden vektoriellen Unwuchten $U_1$, $U_2$ in den beiden Korrekturebenen sind gegeneinander um den Winkel $\alpha$ verdreht. Die zur Korrektur der Unwucht des Fahrzeugrades vorgesehenen Wuchtgewichte sind bezüglich des Gewichts bzw. der Masse gestuft; die Gewichtsstufen der Wuchtgewichte mit der Stufung m sind in Fig. 2 durch Kreislinien angedeutet und mit $A_I$, $A_{II}$, $A_{III}$ und $A_{IV}$ gekennzeichnet. Wird beispielsweise in den beiden Korrekturebenen unabhängig voneinander das dem gemessenen Unwuchtbetrag nächstliegende Unwuchtgewicht zur Korrektur gewählt, so verbleibt nach einem Korrekturvorgang, wie auch aus Figur 3 ersichtlich, eine Restunwucht. Wird beispielsweise die Korrektur mit einem Wuchtgewicht $A_1$ der Gewichtsstufe $A_{IV}$ für die erste Ebene und mit einem Wuchtgewicht $A_2$ der Gewichtsstufe $A_I$ für die zweite Ebene durchgeführt, so verbleibt eine statische Restunwucht $F_{ou}$, die aus dem Stufungsfehler $F_{o1} = A_{IV} - U_1$ und dem Stufungsfehler $F_{u2} = U_2 - A_I$ herrührt; in Fig. 3 sind diese Größen dick gezeichnet hervorgehoben. Da jeder Unwucht $U_1$, $U_2$ aufgrund der Stufung der Wuchtgewichte normalerweise zwei sich durch die Stufung m unterscheidende Wuchtgewichte zugeordnet werden können, ergeben sich insgesamt vier mögliche vektorielle Restunwuchten $F_{ou}$, $F_{oo}$, $F_{uo}$, $F_{uu}$ (Index o "oben", Index u "unten").

Erfindungsgemäß ist vorgesehen, daß die statische Restunwucht, beispielsweise die Restunwucht $F_{ou}$, durch Verdrehen der Wuchtgewichte $A_1$ bzw. $A_2$ gegenüber der mit dem Unwuchtmeßgerät gemessenenen Position um einen Winkel $\gamma_1$ bzw. $\gamma_2$ beseitigt oder so eingestellt wird, daß sie innerhalb zulässiger Toleranzen liegt. Im einzelnen ist das prinzipiell durch folgende, anhand von Fig. 4 beispielhaft erläuterte Vorgehensweise möglich. Durch Winkeldrehung des Wuchtgewichts $A_1$ um $\gamma_1$ in der ersten Korrekturebene aus der durch den Vektor $F_{o1}$ repräsentierten, der Richtung von $U_1$ entsprechenden Richtung heraus wird eine Unwucht $W_1$ in Querrichtung erzeugt und durch Winkeldrehung des Wuchtgewichtes $A_2$ um $\gamma_2$ in der zweiten Korrekturebene eine Unwucht $W_2$. Die Winkeldrehungen $\gamma_1$, $\gamma_2$ sind so zu wählen, daß die Unwuchten $W_1$ und $W_2$, deren Richtungen jeweils im wesentlichen senkrecht zur Richtung des zugehörigen Unwuchtvektors $U_1$ bzw. $U_2$ liegen, bei vektorieller Addition $F_{ou}$ vollständig kompensieren; in Fig. 4 ist die Vektorsumme aus $W_1$ und $W_2$ durch den strichpunktierten Vektor dargestellt, der gleich groß wie $F_{ou}$ ist, aber entgegengerichtet verläuft.

Je Korrekturebene erhöht sich die Restunwucht

auf $R_1$ bzw. $R_2$, wobei $R_1$, $R_2$ im Beispiel nach Fig. 4 jeweils die Vektorsumme aus $F_{o1}$ und $W_1$ bzw. $F_{u2}$ und $W_2$ ist. Die Beträge von $R_1$ und $R_2$ sind gleich groß, die Richtungen entgegengesetzt. Aufgrund der Winkelverschiebung der gestuften Wuchtgewichte ist die statische Restunwucht des Fahrzeugrads nach einem Wuchtvorgang vollständig beseitigt. Die gleich großen, entgegengesetzt gerichteten Restunwuchten $R_1$ und $R_2$ in den beiden Korrekturebenen ergeben eine vernachlässigbare dynamische Restunwucht des Fahrzeugrads, was durch Überwachung der Restunwuchtbeträge mit einem Grenzwert $R_{max}$ je Ebene sichergestellt wird.

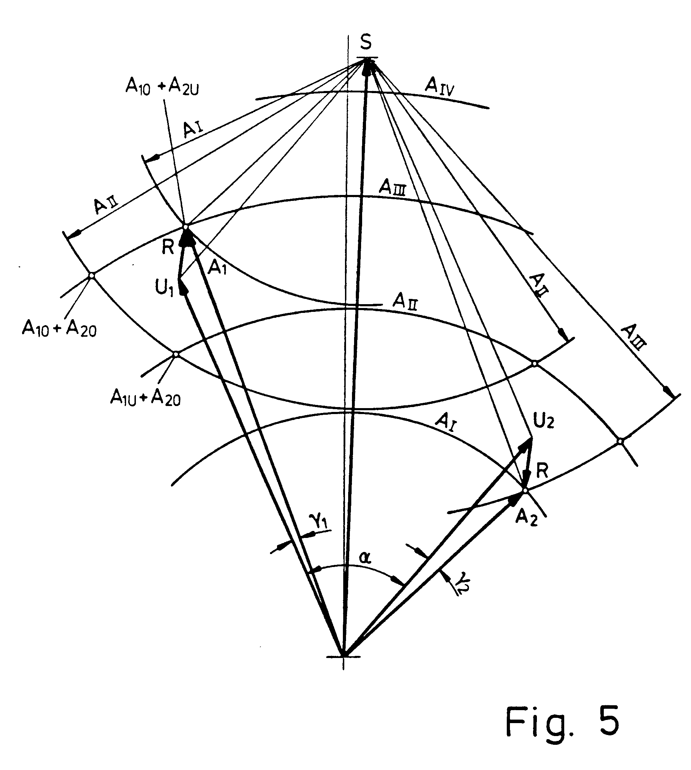

Das erfindungsgemäße Verfahren wird im folgenden anhand der Fign. 5 bis 9 noch näher erläutert. In der Fig. 5 sind, wie in Fig. 2, die die gemessenen Unwuchten vollständig kompensierenden Unwuchten $U_1$ und $U_2$ für die beiden Korrekturebenen zusammen mit den Gewichtsstufen $A_I$ bis $A_{IV}$ der Wuchtgewichte schematisch dargestellt. Erfindungsgemäß werden für jede Korrekturebene die beiden nächstkommenden Wuchtgewichtsstufen ermittelt. Für die erste Ebene sind dies - im Beispiel nach Figur 5 - die Wuchtgewichtsstufen $A_{II}$ und $A_{III}$, wobei der Betrag der Unwucht $U_1$ zwischen den Wuchtgewichtsstufen $A_{II}$ und $A_{III}$ liegt; die Wuchtgewichtsstufen sind durch die entsprechenden Kreislinien um den Schnittpunkt von $U_1$ und $U_2$ dargestellt. Für die zweite Ebene sind das bezüglich der Unwucht $U_2$ die Wuchtgewichtsstufen $A_I$ und $A_{II}$. Der aus den Unwuchtvektoren $U_1$ und $U_2$ resultierende Unwuchtvektor ist mit S bezeichnet.

Nunmehr werden die höchstens vier möglichen vektoriellen Kombinationen, die als Resultierende den resultierenden Unwuchtvektor S bilden, von jeweils zweien dieser vier Wuchtgewichtsstufen in der Nähe der Unwucht $U_1$ oder $U_2$ ermittelt. In der Darstellung nach Fig. 5 sind dies die drei Kombinationen in der Nähe der Unwucht $U_1$, die mit $A_{1o}$ + $A_{2u}$, $A_{1o}$ + $A_{2o}$, $A_{1u}$ + $A_{2o}$ bezeichnet sind; eine vierte Kombination $A_{1u}$ + $A_{2u}$ liegt aufgrund der gewählten Stufung im Beispiel nach Fig. 5 nicht vor.

Danach werden die vektoriellen Differenzen R dieser Kombinationen zur Unwucht $U_1$ bzw. $U_2$ ermittelt und der Betrag der kleinsten Differenz mit dem durch die zulässige dynamische Restunwucht bestimmten $R_{max}$ verglichen.

Im Beispiel nach Fig. 5 ist der kleinste Differenzbetrag R nicht größer als $R_{max}$ und durch die Kombination $A_{1o}$ + $A_{2u}$ gegeben. $A_{1o}$ + $A_{2u}$ ist die ermittelte Korrektur $A_1$ für die erste Korrekturebene. Da die Vektorsumme aus $A_1$ und $A_2$ den resultierenden Unwuchtvektor S ergeben soll, ist damit $A_2$ festgelegt. Nach einem entsprechenden Wuchtvorgang ist die statische Unwucht des Fahrzeugrades beseitigt, die dynamische Unwucht liegt innerhalb der zulässigen Grenze.

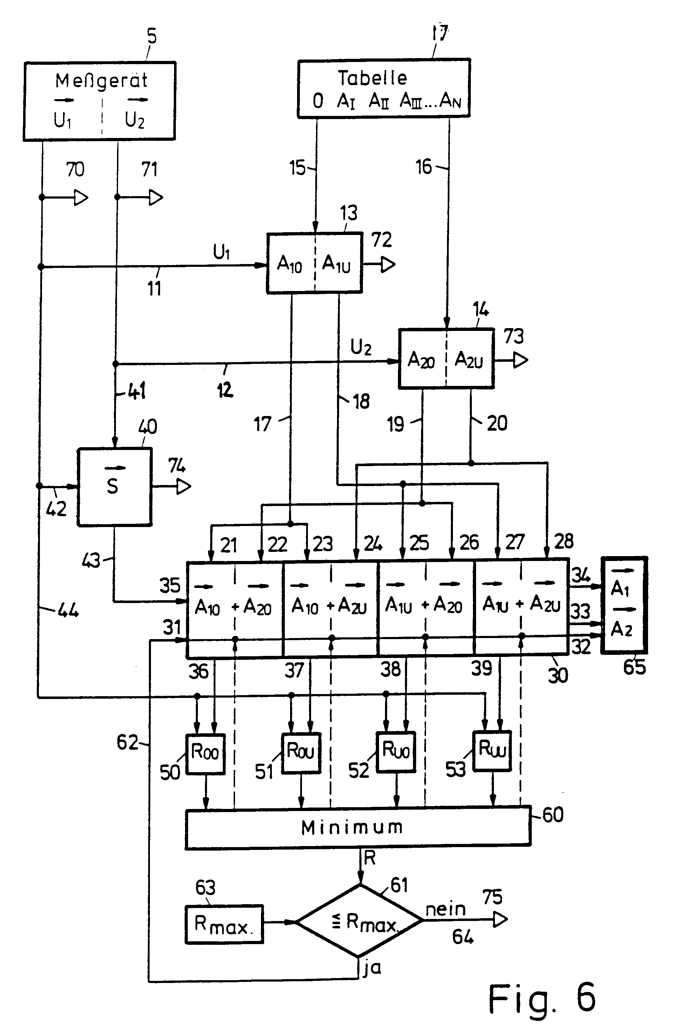

Anhand der Fig. 6 wird die Signalverarbeitung bei dem erfindungsgemäßen Verfahren erläutert. Die die von der Unwuchtmeßeinrichtung 5 für die jeweilige Korrekturebene gemessenen Unwuchtwerte vollständig kompensierenden Unwuchtwerte $U_1$, $U_2$ (vektorielle Unwuchtwerte) werden über jeweils eine Signalleitung 11 bzw. 12 einer Vergleichseinrichtung 13 bzw. i4 zugeführt. Die Vergleichseinrichtung 13 bzw. 14 weist einen weiteren Eingang auf, dem über eine Signalleitung 15 bzw. 16 Inhaltswerte eines nicht flüchtigen Speichers 17 zugeführt werden. Im Speicher 17 sind N + 1 Gewichtsstufen 0, $A_I$, $A_{II}$, ..., $A_N$ der Wuchtgewichte betragsmäßig abgespeichert. In der Vergleichseinrichtung 13 bzw. 14 erfolgt ein Vergleich des Betrages der Unwucht $U_1$ bzw. $U_2$ mit den Wuchtgewichtswerten 0, $A_I$, ... $A_N$ und die beiderseits des Unwuchtbetrages liegenden nächstkommenden Wuchtgewichtsstufen $A_{1o}$ und $A_{1u}$ für die erste Korrekturebene bzw. $A_{2o}$ und $A_{2u}$ für die zweite Korrekturebene werden ermittelt und weiterverarbeitbar bereitgehalten.

In einer Additionsstufe 40, der über Signalleitungen 41 und 42 die Unwuchtvektoren $U_1$ und $U_2$ zugeführt werden, wird durch Vektoraddition ein resultierender Unwuchtvektor S gebildet, der am Ausgang 43 ansteht. Die selektierten Wuchtgewichtsstufen $A_{1o}$, $A_{1u}$ und $A_{2o}$, $A_{2u}$ werden über zugeordnete Signalleitungen 17, 18 und 19, 20 Eingängen 21 bis 28 einer Signalverarbeitungseinheit 30 zugeführt, und zwar die Wuchtgewichtsstufe $A_{1o}$ den Eingängen 21 und 23, $A_{2o}$ den Eingängen 22 und 26, $A_{2u}$ den Eingängen 24 und 28 und $A_{1u}$ den Eingängen 25 und 27. Ferner sind ein Steuereingang 31, ein Steuerausgang 32, Signalausgänge 33, 34 und ein weiterer Eingang 35 vorgesehen, dem das am Ausgang 43 der Additionseinheit 40 anstehende Vektorsignal S zugeführt wird. Der Steuereingang 31 steuert, wie nachfolgend noch näher erläutert, die Signalausgänge 33 und 34.

In der Signalverarbeitungseinheit werden aus den anstehenden Wuchtgewichtssignalen $A_{1o}$, $A_{1u}$, $A_{2o}$ und $A_{2u}$ und dem Vektorsignal S vier vektorielle Kombinationen, nämlich $A_{1o}$ + $A_{2o}$, $A_{1o}$ + $A_{2u}$, $A_{1u}$ + $A_{2o}$ sowie $A_{1u}$ + $A_{2u}$ gebildet, die jeweils als Resultierende den Vektor S ergeben.

Die diese Kombinationen repräsentierenden Signale werden über Leitungen 36, 37, 38 und 39 Differenzstufen 50, 51, 52 und 53 zugeführt, denen weiterhin das auf der Signalleitung 42 bzw. 44 anstehende und den Unwuchtvektor $U_1$ repräsentierende Unwuchtsignal zugeführt wird. In den Differenzstufen werden die vektoriellen Differenzen R der Kombinationen $A_{1o}$ + $A_{2o}$, $A_{1o}$ + $A_{2u}$, $A_{1u}$ + $A_{2o}$, $A_{1u}$ + $A_{2u}$ mit dem Unwuchtvektor $U_1$ gebildet. An den Ausgängen der Differenzstufen 50 bis 53 stehen jeweils die Beträge der Differenzvektoren R an und werden einer Selektierstufe 60 zugeführt, die den kleinsten Differenzbetrag R aussondert. Dieser kleinste Differenzbetrag R wird einem Vergleicher 61 zugeführt, dem an einem weiteren Eingang aus einem Speicher 63 der Betrag der maximal zulässigen Restunwucht $R_{max}$ zugeführt wird.

Ist R nicht größer als $R_{max}$, wird über eine Steuerleitung 62 der Steuereingang 31 der Signalverarbeitungseinheit 30 mit einem Steuersignal beaufschlagt, so daß das Signal der diesem Differenzbetrag zugeordneten Kombination an die Ausgänge 33, 34 weitergegeben wird und gesteuert vom Steuerausgang 32 in einer Einheit 65 als vektorielle Korrektur $A_1$, $A_2$ angezeigt bzw. weiterverarbeitbar bereitgehalten wird. Wie bereits oben anhand der Fig. 5 dargelegt, ist die statische Unwucht des Fahrzeugrades vollständig beseitigt, die dynamische Unwucht liegt innerhalb zulässiger Grenzen.

Ist R größer als $R_{max}$, so kann Rücksicht auf die dynamische Unwucht die statische Unwucht nicht vollständig beseitigt werden. Die statische Restunwucht wird jedoch mit Hilfe der beiden folgenden Verfahrensabschnitte auf einen Minimalwert reduziert. Auf der Signalleitung 64 steht ein entsprechendes Signal, das den parallelen Ablauf dieser beiden Verfahrensabschnitte einleitet und die Übergabe von an den durch die Pfeile 70 bis 75 gekennzeichneten Stellen anstehenden Signalen an Untersignalverarbeitungseinrichtungen bewirkt. Von den von den beiden Verfahrensabschnitten gelieferten Korrekturwerten wird diejenige Korrektur $A_1$, $A_2$, deren Resultierende die kleinere Differenz zu dem resultierenden Unwuchtvektor S aufweist, zur Korrektur ausgewählt.

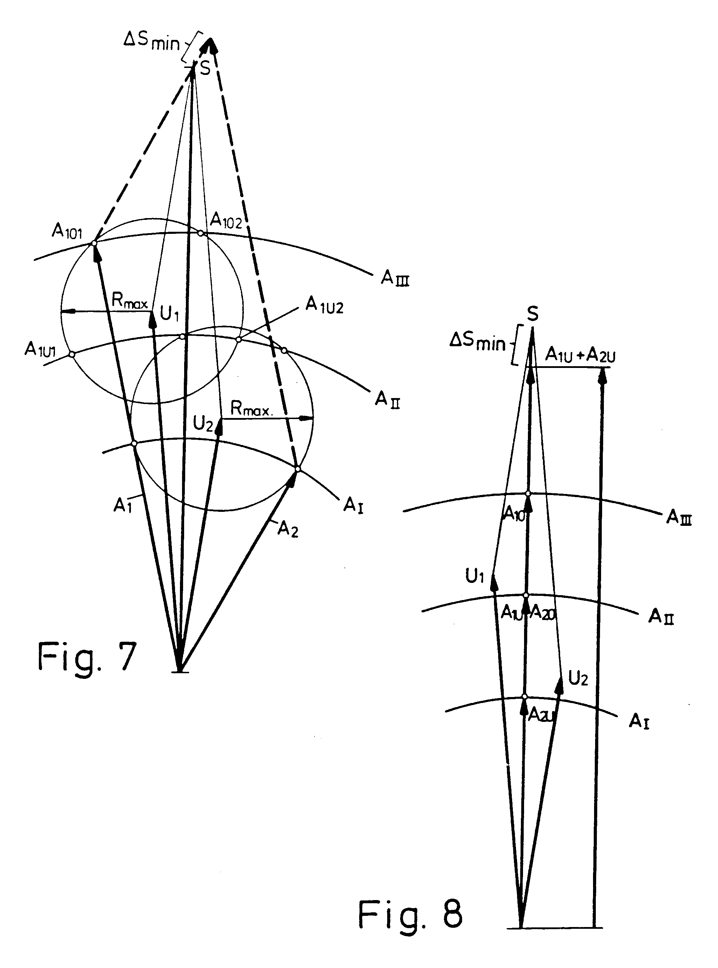

Die parallel laufenden Verfahrensabschnitte werden im folgenden anhand der Fign. 7 bis 9 erläutert.

In der Fig. 7, die zur Erläuterung des einen Verfahrensabschnitts dient, sind in Anlehnung an Fig. 2 die Kompensations-Unwucht $U_1$ in der ersten Korrekturebene und die Kompensations-Unwucht $U_2$ in der zweiten Korrekturebene, der resultierende Unwuchtvektor S sowie die Wuchtgewichtsstufen $A_I$ bis $A_{III}$ aufgetragen. In diesem Beispiel liegen die Unwuchten im Vergleich zu Fig. 5 in einem wesentlich geringerem Winkelabstand zueinander. Es werden die beiden Korrekturen $A_1$ und $A_2$ ermittelt, die je Ebene um den Betrag $R_{max}$ von den Unwuchten $U_1$ und $U_2$ entfernt sind und deren Resultierende möglichst wenig von dem Unwuchtvektor S abweicht. Die Korrekturen $A_1$ bzw. $A_2$, die um den Betrag $R_{max}$ von den Unwuchten $U_1$ bzw. $U_2$ abweichen, liegen auf einem Kreis mit dem Radius $R_{max}$ um die Spitze des Unwuchtvektors $U_1$ bzw. $U_2$ und - da die Korrektur gestuft erfolgen soll - auf Kreisen mit den jeweils nächstkommenden Gewichtsstufen als Radius um den Anfang des Vektors $U_1$. Im

Beispiel nach Fig. 6 ergeben sich für die erste Korrekturebene aus den Schnittpunkten die Korrekturen $A_{1o1}$, $A_{1o2}$, $A_{1u1}$ und $A_{1u2}$. In nicht näher dargestellten Signalverarbeitungseinrichtungen werden diese möglichen Korrekturen $A_1$ bzw. $A_2$ unter Heranziehung der Werte für die Unwuchtvektoren $U_1$ bzw. $U_2$, der nächstkommenden beiden Wuchtgewichtsstufen sowie des Betrages $R_{max}$ ermittelt. Alle ermittelten Korrekturen $A_1$ und $A_2$ werden miteinander vektoriell verknüpft und diejenigen Kombinationen der beiden Korrekturen $A_1$ und $A_2$ bestimmt, deren Resultierende am wenigsten von der Resultierenden der Unwuchten $U_1$ und $U_2$ abweicht. Dazu wird die Differenz aus der Resultierenden der Korrekturen $A_1$ und $A_2$ und der Resultierenden S der Unwuchtvektoren $U_1$ und $U_2$ gebildet, und die Kombination von $A_1$ und $A_2$ mit minimaler Differenz $\Delta S_{min}$ ausgewählt und weiterverarbeitbar bereitgehalten.

In der Fig. 8, anhand derer der parallel auszuführende andere Verfahrensschritt erläutert wird, sind in Anlehnung an die Fig. 2 die Kompensations-Unwuchten $U_1$, $U_2$, der resultierende Unwuchtvektor S sowie die Wuchtgewichtsstufen $A_I$ bis $A_{III}$ aufgetragen. Es werden die beiden Korrekturen $A_1$ und $A_2$ ermittelt, die in Richtung des resultierenden Unwuchtvektors S oder um 180° verdreht zur Resultierenden S verlaufen und deren Summe möglichst wenig von dem resultierenden Unwuchtvektor S abweicht und bei denen der Fehler je Korrekturebene, der durch die Differenz der jeweiligen Korrektur und der jeweiligen Unwucht bestimmt ist, möglichst klein ist. Da die Richtungen der Vektoren S und A übereinstimmen bzw. gegenläufig sind, werden bei der Ermittlung der Korrektur $A_1$ und $A_2$ vorzugsweise skalare, durch die Beträge von $A_1$, $A_2$ und S definierte Größen herangezogen.

In einer nicht näher dargestellten Signalverarbeitungseinrichtung werden die Abweichungen der möglichen Korrekturbeträge $A_{1o}$, $A_{1u}$ bzw. $A_{2o}$, $A_{2u}$ von den zugeordneten Unwuchten $U_1$ bzw. $U_2$ festgestellt und die Korrekturbeträge mit der kleinsten Abweichung pro Ebene zur Bildung entsprechender Kombinationen aus den möglichen Kombinationen $A_{1o} + A_{2o}$, $A_{1o} + A_{2u}$, $A_{1u} + A_{2o}$ sowie $A_{1u} + A_{2u}$ herangezogen. Aus den berücksichtigten Kombinationen wird die Kombination mit der kleinsten Abweichung von S ausgesondert und als Korrektur $A_1$, $A_2$ weiterverarbeitbar bereitgehalten. Im Beispiel nach Fig. 8 haben die Korrekturen $A_{1u}$ und $A_{2u}$ den kleinsten Fehler je Korrekturebene und weichen in ihrer Summe um $\Delta S_{min}$ von S ab. Als mögliche Korrektur $A_1$ liefert dieses Verfahren also $A_{1u}$ bzw. die Gewichtsstufe $A_{II}$, während als Korrektur $A_2$ $A_{2u}$ bzw. die Gewichtsstufe $A_I$ geliefert wird; die Korrekturen $A_1$, $A_2$ liegen in gleicher, durch den resultierenden Unwuchtvektor S festgelegter Richtung.

Die im Verfahrensabschnitt nach Fig. 7 und die im Verfahrensabschnitt nach Fig. 8 ermittelten Korrekturen $A_1$, $A_2$ werden verglichen. Diejenige Korrektur $A_1$, $A_2$, deren Resultierende die kleinere Differenz $\Delta S_{min}$ zu dem resultierenden Unwuchtvektor aufweist wird schließlich angezeigt bzw. weiterverarbeitbar bereitgehalten.

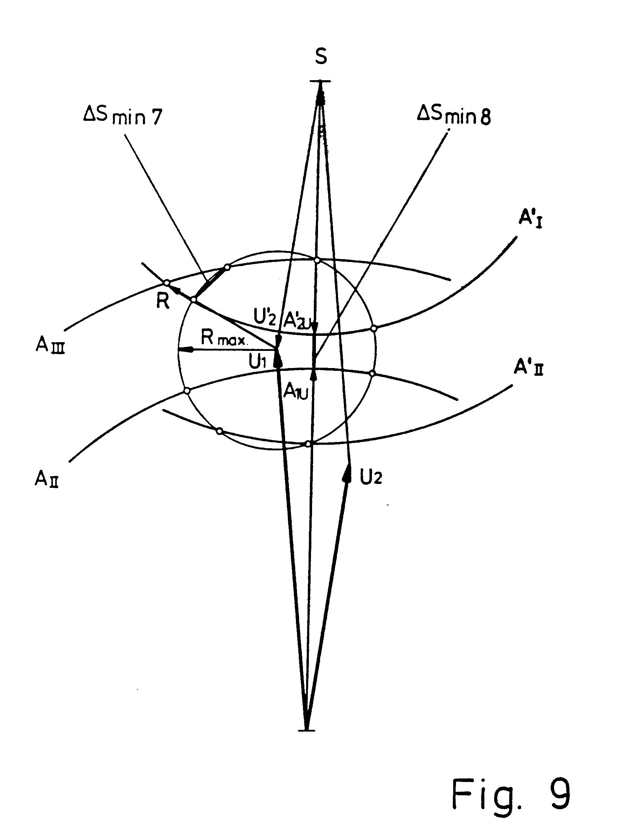

In der Fig. 9 sind die sich bei den Verfahrensabschnitten nach den Fign. 7 und 8 einstellenden Verhältnisse schematisch zusammengestellt.

Wie aus der Darstellung ersichtlich, ist R größer als $R_{max}$; mit Rücksicht auf die zulässige dynamische Unwucht kann die statische Unwucht des Fahrzeugrades nicht vollständig beseitigt werden. Die in diesem Beispiel vorzuziehende Korrektur zur Unwuchtverringerung erhält man aus den im Verfahrensabschnitt nach Fig. 8 ermittelten Korrekturen $A_1$, $A_2$, da die Differenz $\Delta S_{min8}$ der Resultierenden aus den Korrekturen $A_1$, $A_2$ zur Unwuchtresultierenden S kleiner ist als die beim Verfahrensabschnitt nach Fig. 7 sich ergebende Differenz $\Delta S_{min7}$.

Als optimale Werte für die Reduzierung der Radunwucht in den beiden Korrekturebenen werden im Beispiel nach Fig. 9 die Korrekturen

$A_1$ = Wuchtgewichtsstufe $A_{II}$ in Richtung Unwuchtresultierende und

$A_2$ = Wuchtgewichtsstufe $A_I$ in Richtung Unwuchtresultierende

angezeigt oder weiterverarbeitbar bereitgehalten.

Das im vorhergehenden erläuterte Verfahren läßt sich besonders vorteilhaft mit einer elektronischen Recheneinrichtung als Teil eines Unwuchtmeßgeräts ausführen.

**Patentansprüche**

1. Verfahren zur Bestimmung von Lage und Größe einer Korrektur in Korrekturebenen zur Verringerung einer in einem scheibenförmigen Körper festgestellten Unwucht, insbesondere in einem luftbereiften Fahrzeugrad, bei dem bezüglich der Größe stufenweise und bezüglich der Lage kontinuierlich bestimmbare Korrekturen vorgesehen sind, dadurch gekennzeichnet, daß

- die Unwucht in den Korrekturebenen nach Größe und Lage ermittelt wird,
- mindestens die der ermittelten Größe der Unwucht am nächsten kommenden Wuchtgewichtsstufen pro Korrekturebene festgestellt werden,
- deren zugehörige Lageabweichung gegenüber den in den Korrekturebenen ermittelten Unwuchtlagen unter Zugrundelegung einer gleichbleibenden Gesamtunwuchtwirkung ermittelt werden,

- mit den verschiedenen Wuchtgewichtsstufen der einen Korrekturebene Kombinationen mit den verschiedenen Wuchtgewichtsstufen der anderen Korrekturebenen gebildet und deren dynamische und statische Restunwucht bestimmt werden,
- aus den Kombinationen jeweils höchstens ein gestuftes Unwuchtgewicht pro Korrekturebene und deren zugehörige Lageabweichung ausgewählt werden, die unter Einhaltung von vorgegebenen Grenzen der dynamischen Restunwucht die geringstmögliche statische Restunwucht aufweisen.

2. Verfahren nach Anspruch 1, dadurch gekennzeichnet, daß

- Kombinationen der beiden Wuchtgewichtsstufen je Korrekturebene gebildet werden, die der ermittelten Unwucht am nächsten kommen, deren Resultierende der resultierenden Unwucht entspricht,
- die Differenz jeder Kombination zur Unwucht in einer der beiden Korrekturebenen ermittelt wird,
- diejenige Kombination ermittelt wird, die die kleinste Differenz aufweist, und,
- falls die Differenz nicht größer ist als die je Korrekturebene zulässige Restunwucht, diese Kombination als Korrektur in der einen Korrekturebene vorgesehen wird und die vorzusehende Korrektur in der anderen Korrekturebene aus der Korrektur in der ersten Korrekturebene und der resultierenden Unwucht ermittelt wird, und,
- falls die Differenz größer ist als die je Korrekturebene zulässige Restunwucht, Korrekturen ermittelt werden, deren Resultierende von der resultierenden Unwucht abweichen und aus diesen ermittelten

Korrekturen die Korrektur mit der kleinsten Abweichung zur resultierenden Unwucht zur Korrektur vorgesehen wird.

3. Verfahren nach Anspruch 2, dadurch gekennzeichnet, daß bei der Ermittlung der Korrekturen zum einen die Korrekturen herangezogen werden, die je Korrektureben um die zulässige Restunwucht von der ermittelten Unwucht entfernt liegen, zum anderen Korrekturen herangezogen werden, deren Richtungen der Richtung der resultierenden Unwucht entsprechen oder entgegengesetzt gerichtet sind, deren Summen von der resultierenden Unwucht abweichen, und die je Korrekturebene eine vorgegebene Differenz zur Unwucht nicht überschreiten.

4. Verfahren nach Anspruch 3, dadurch gekennzeichnet, daß bei der Ermittlung der Korrekturen diejenigen Korrekturen in Richtung der oder entgegengesetzt zur resultierenden Unwucht mit der kleinsten Differenz zur ermittelten Unwucht in der jeweiligen Korrekturebene herangezogen werden.

## Claims

1. Process to determine the position and magnitude of a correction in correction planes for the purpose of reducing an imbalance identified in a disc-shaped solid, particularly a vehicle wheel fitted with a pneumatic tyre, whereby the corrections in respect of magnitude can be calculated stepwise and those in respect of position can be calculated continuously, characterised in that
   - the imbalance in the correction planes is identified both in terms of magnitude and position,
   - at least the balancing weight increments nearest to the identified magnitude of imbalance are calculated for each correction plane,
   - whose associated positional deviation from the imbalance positions in the correction planes is calculated on the basis of a constant overall imbalance effect,
   - combinations are formed between the various balancing weight increments of the one correction plane and the various balancing weight increments of the other correction plane and whose dynamic and static residual imbalance is then calculated,
   - in each case only one balancing weight increment and its associated positional deviation are selected from the combinations, which, assuming the preset limits of the residual dynamic imbalance are maintained, exhibit the minimum possible residual static imbalance.

2. Process as claimed in claim 1, characterised in that,
   - combinations of the two balancing weight increments nearest to the identified imbalance are formed for each correction plane, whose resultant is equal to the resultant imbalance,
   - the variation between any combination and the imbalance is calculated in one of the two correction planes,
   - that combination is identified which has the smallest variation and,
   - if the variation is not greater than the acceptable residual imbalance for that correction plane, this combination is used as a correction for one of the correction planes and the correction to be used for the other correction plane is calculated from the correction for the first correction plane and the resultant imbalance and,
   - if the variation is greater than the acceptable residual imbalance for that correction plane, corrections are calculated of which the resultant deviates from the resultant imbalance, and from these calculated corrections the correction with the smallest deviation from the resultant imbalance is then selected and used as the correction.

3. Process as claimed in claim 2, characterised in that, in calculating the corrections the corrections to be used are firstly those which, for each correction plane, deviate from the calculated imbalance by an amount equal to the acceptable residual imbalance and secondly those whose directions are either the same as or opposite to the direction of the total imbalance, whose aggregates deviate from the total imbalance and which, for each correction plane, do not differ from the imbalance by more than a predetermined variation.

4. Process as claimed in claim 3, characterised in that, to calculate the corrections, the corrections to be used are those whose direction is the same as or opposite to the total imbalance and which have the smallest variation to the identified imbalance in the relevant correction plane.

## Revendications

1. Procédé pour déterminer la position et la grandeur d'une correction dans des plans de correction pour réduire un balourd constaté dans un corps circulaire, en particulier dans une roue de véhicule équipée d'un pneumatique, dans lequel on prévoit des corrections déterminables de façon échelonnée en ce qui concerne la grandeur et de façon continue en ce qui concerne la position, caractérisé en ce que :
   - on détermine le balourd dans les plans de correction en grandeur et position ;
   - on détermine au moins dans chaque plan de correction les paliers de masse d'équilibrage les plus proches de la grandeur du balourd déterminée ;
- on détermine l'écart en position correspondant par rapport aux positions de balourd déterminées dans les plans de correction, sur la base d'un effet de déséquilibre global constant ;
- on forme, avec les différents paliers de masse d'équilibrage de l'un des plans de correction des combinaisons avec les différents paliers de masse d'équilibrage de l'autre plan de correction, et l'on détermine leur déséquilibre dynamique et statique résiduel ;
- parmi les combinaisons, on sélectionne chaque fois au plus un palier de masse d'équilibrage par plan de correction et son écart de position correspondant, qui présentent, en observant des limites de déséquilibre dynamique résiduel prédéterminées, le plus faible déséquilibre statique résiduel possible.

2. Procédé selon la revendication 1, caractérisé en ce que :
- on forme des combinaisons des deux paliers de masse d'équilibrage dans chaque plan de correction respectif, qui sont les plus proches du balourd déterminé, dont la résultante correspond au balourd résultant ;
- on détermine la différence de chaque combinaison avec le balourd dans l'un des deux plans de correction;
- on détermine la combinaison qui présente la plus petite différence, et
- si la différence n'est pas supérieure au balourd résiduel admissible dans chaque plan de correction respectif, on prévoit cette combinaison comme correction dans l'un des plans de correction et l'on détermine la correction à prévoir dans l'autre plan de correction à partir de la correction dans le premier plan de correction et du balourd résultant, et
- si la différence est supérieure au balourd résiduel admissible dans chaque plan de correction respectif, on détermine des corrections dont les résultantes s'écartent du balourd résultant et l'on prévoit, à partir de ces corrections déterminées, la correction comportant le plus petit écart par rapport au balourd résultant, pour la correction.

3. Procédé selon la revendication 2, caractérisé en ce que, pour la détermination des corrections, on utilise d'une part les corrections qui, dans les plans de correction respectifs, diffèrent du balourd résiduel admissible du balourd déterminé, d'autre part des corrections dont les directions correspondent à la direction du balourd résultant ou lui sont opposées, dont les sommes diffèrent du balourd résultant, et qui, pour chaque plan de correction respectif, ne dépassent pas une différence prédéterminée par rapport au balourd.

4. Procédé selon la revendication 3, caractérisé en ce que, pour la détermination des corrections, on utilise les corrections dans la direction du balourd résultant ou opposées présentant la plus petite différence par rapport au balourd déterminé dans le plan de correction respectif.

Fig. 1

Fig. 2

EP 0 290 867 B1

Fig. 3

Fig. 4

10

Fig. 5

Fig. 6

Fig. 7

Fig. 8

13

Fig. 9